# EUROPEAN PATENT APPLICATION

(11) **EP 4 770 102 A1**
(43) Date of publication of application: **01.07.2026**
(21) Application number: 25226958.4
(22) Date of filing: 23.12.2025
(51) Int. Cl.: H04N 21/436, H04N 21/4363, H04N 21/4367, H04N 21/4627, H04R 5/04

(54) **DISPLAY DEVICE, SYSTEM INCLUDING THE SAME, AND METHOD THEREOF**

(30) Priority: 27.12.2024 KR 20240198352
(71) Applicant: LG Electronics Inc., Yeongdeungpo-gu Seoul 07336 (KR)
(72) Inventor: KIM, Sanghun, Seoul (KR); JEONG, Hyojeong, Seoul (KR); JANG, Yoonsuk, Seoul (KR); LEE, Hansu, Seoul (KR); KIM, Hyorim, Seoul (KR)
(74) Representative: Vossius & Partner Patentanwälte Rechtsanwälte mbB

(57) **Abstract**

The present disclosure relates to a display device including the same, and a method thereof. A display device according to an embodiment of the present disclosure may include: a display; a wireless communication interface; and a controller, and the controller may confirm information related to an output of a content through the display, based on activation of a predetermined function of broadcasting an audio packet including audio data through the wireless communication interface, determine whether a predetermined condition related to providing an audio of a predetermined content output through the display is satisfied, based on the information related to the output of the content, broadcast a first audio packet including audio data of the predetermined content through the wireless communication interface, based on satisfaction of the predetermined condition, and perform a predetermined operation related to encryption of the audio data of the predetermined content based on dissatisfaction of the predetermined condition.

## Description

### CROSS-REFERENCE TO RELATED APPLICATIONS

This application claims priority to Korean Patent Application No. 10-2024-0198352, filed in the Republic of Korea on December 27, 2024, the entire contents of which are hereby expressly incorporated by reference into the present application.

### BACKGROUND

### Field of the Invention

The present disclosure relates to a display device, a system including the same, and a method thereof, and more particularly, to a display device, a system including the same, and a method thereof which broadcast a packet including audio data.

### Discussion of the Related Art

Digital TV services using wired or wireless communication networks are becoming common. Digital TV services may provide various services which cannot be provided by the existing analog broadcast service.

For example, Internet protocol television (IPTV) and smart TV services which are types of digital TV services provide interactivity to allow user to actively select a type of a program to be watched, a viewing time, etc. The IPTV and smart TV services may provide various additional services, such as Internet search, home shopping and online games, based on such interactivity.

The display device is also possible to mutually transmit and receive data to and from various electronic devices wiredly/wirelessly. For example, the display device can perform communication connection with an external speaker through a Bluetooth scheme which is one of the short-range communication schemes.

In recent years, a research has been actively conducted on technologies for forwarding audio signals to a plurality of external devices using the short-range communication scheme so that a plurality of users can enjoy contents together. For example, Bluetooth Low Energy (BLE) is a Bluetooth technology that enables data forwarding with low power consumption and low cost, and an LE Low Energy audio is an audio transmission standard that provides audio signals by utilizing characteristics of the Bluetooth Low Energy (BLE). In this case, when a display device broadcasts an audio signal using an LE audio, external devices can receive a broadcasted audio signal and output the audio.

Meanwhile, an importance of Digital Rights Management (DRM) is increasing in order to protect a copyright of a digital content and prevent illegal copying and distribution. Further, in order to protect minor users, it is necessary to restrict contents provided to users according to ages of users consuming the contents. When the contents are provided through the display device, if the display device restrictively forwards audio signals only to specific external devices, problems related to the Digital Rights Management (DRM), protection of minors, etc., are unlikely to occur; however, when broadcasting audio signals to an unspecified number of external devices, such problems are highly likely to occur.

### SUMMARY

In view of the above, an object of the present disclosure is to solve the above-described problems and other problems.

Another object of the present disclosure is to provide a display device, a system including the same, and an operating method thereof which may utilize various information related to an output of a content in determining whether to broadcast an audio of the content.

Yet another object of the present disclosure is to provide a display device, a system including the same, and an operating method thereof which may determine whether to encrypt audio data prior to broadcasting the audio of the content.

Still yet another object of the present disclosure is to provide a display device, a system including the same, and an operating method thereof which may provide a user interface that sets authentication information used for encryption when encrypting the audio data is required.

Still yet another object of the present disclosure is to provide a display device, a system including the same, and an operating method thereof which may provide information for the broadcasting of the audio of the content to a user terminal through a network.

Still yet another object of the present disclosure is to provide a display device, a system including the same, and an operating method thereof which may prevent occurrence of problems related to Digital Rights Management (DRM), protection of minors, and the like by blocking inappropriate broadcasting for the audio of the content.

In order to achieve the object, a display device according to an embodiment of the present disclosure may include: a display; a wireless communication interface; and a controller, and the controller may confirm information related to an output of a content through the display, based on activation of a predetermined function of broadcasting an audio packet including audio data through the wireless communication interface, determine whether a predetermined condition related to providing an audio of a predetermined content output through the display is satisfied, based on the information related to the output of the content, broadcast a first audio packet including audio data of the predetermined content through the wireless communication interface, based on satisfaction of the predetermined condition, and perform a predetermined operation related to encryption of the audio data of the predetermined content based on dissatisfaction of the predetermined condition.

In order to achieve the object, an operating method of a display device according to an embodiment of the present disclosure may include: an operation of confirming information related to an output of a content through a display, based on activation of a predetermined function of broadcasting an audio packet including audio data; an operation of determining whether a predetermined condition related to providing an audio of a predetermined content output through the display is satisfied, based on the information related to the output of the content; an operation of broadcasting a first audio packet including audio data of the predetermined content based on satisfaction of the predetermined condition; and an operation of performing a predetermined operation for encryption of the audio data of the predetermined content based on dissatisfaction of the predetermined condition.

In order to achieve the object, a system according to an embodiment of the present disclosure may include: a display device; at least one user terminal; and an audio device communicatively connected to the at least one user terminal, and the display device may confirm information related to an output of a content through a display of the display device, based on activation of a predetermined function of broadcasting an audio packet including audio data through the wireless communication interface, determine whether a predetermined condition related to providing an audio of a predetermined content output through the display is satisfied, based on the information related to the output of the content, broadcast a first audio packet including audio data of the predetermined content based on satisfaction of the predetermined condition, and perform a predetermined operation related to encryption of the audio data of the predetermined content based on dissatisfaction of the predetermined condition.

Effects of the display device, the system including the same, and the operating according to the present disclosure are described as follows.

As described above, according to at least one embodiment of the present disclosure, various information related to the output of the content may be utilized in determining whether to broadcast the audio of the content.

According to at least one embodiment of the present disclosure, it may be determined whether to encrypt the audio data prior to broadcasting the audio of the content.

According to at least one embodiment of the present disclosure, when the encryption of the audio data is required, a user interface for setting the authentication information used for the encryption may be provided.

According to at least one embodiment of the present disclosure, information for broadcasting of the audio of the content may be provided to the user terminal trough the network.

According to at least one embodiment of the present disclosure, inappropriate broadcasting of the audio of the content may be blocked, thereby preventing occurrence of problems related to digital rights management (DRM), protection of minors, and the like.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the idea and scope of the present disclosure will become apparent to those skilled in the art from this detailed description..

### BRIEF DESCRIPTION OF THE DRAWINGS

Fig. 1 is a block diagram of a display device according to an embodiment of the present disclosure.
Fig. 2 is a block diagram of a remote control device according to an embodiment of the present disclosure.
Fig. 3 is a diagram illustrating an example of a configuration of the remote control device according to an embodiment of the present disclosure.
Fig. 4 is a diagram illustrating an example of utilizing the remote control device according to an embodiment of the present disclosure.
Fig. 5 is a diagram illustrating an example of a configuration of a system according to an embodiment of the present disclosure.
Figs 6 and 7 are diagrams referenced for describing a setting of an audio broadcasting function according to embodiments of the present disclosure.
Figs. 8 and 9 are flowcharts for an operating method of a display device according to an embodiment of the present disclosure.
Figs. 10 to 17 are diagrams referenced for describing an operation of a display device according to an embodiment of the present disclosure.
Fig. 18 is a flowchart of an operating method of a system according to an embodiment of the present disclosure.
Figs. 19A and 19B are diagrams referenced for describing an operation of a system according to an embodiment of the present disclosure.
Fig. 20 is a flowchart of an operating method of a system according to another embodiment of the present disclosure.
Figs. 21A and 21B are diagrams referenced for describing an operation of a system according to another embodiment of the present disclosure.

### DETAILED DESCRIPTION

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification.

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first, second, etc. may be used to describe various elements, but these elements are not limited by these terms. These terms are used only to distinguish one element from another.

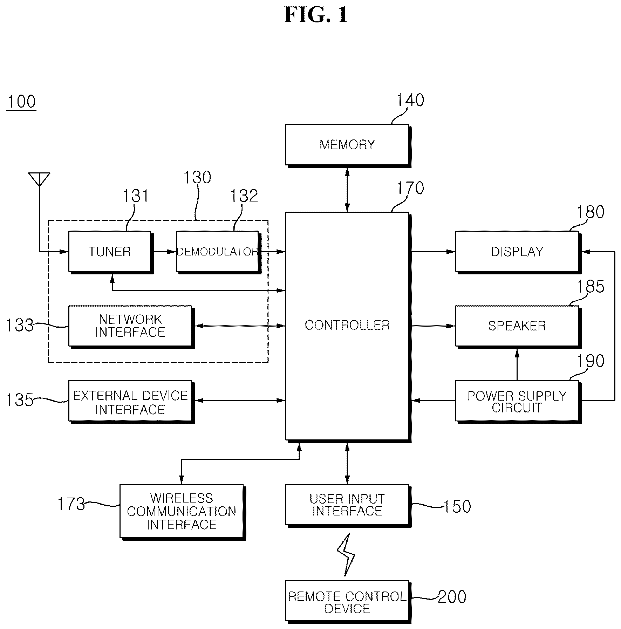

FIG. 1 is a block diagram showing a configuration of a display device according to an embodiment of the present disclosure.

Referring to FIG. 1, a display device 100 may include an image receiver 130, an external device interface 135, a memory 140, a user input interface 150, a controller 170, a wireless communication interface 173, a display 180, a speaker 185, and a power supply circuit 190.

The image receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface unit 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 the speaker 185.

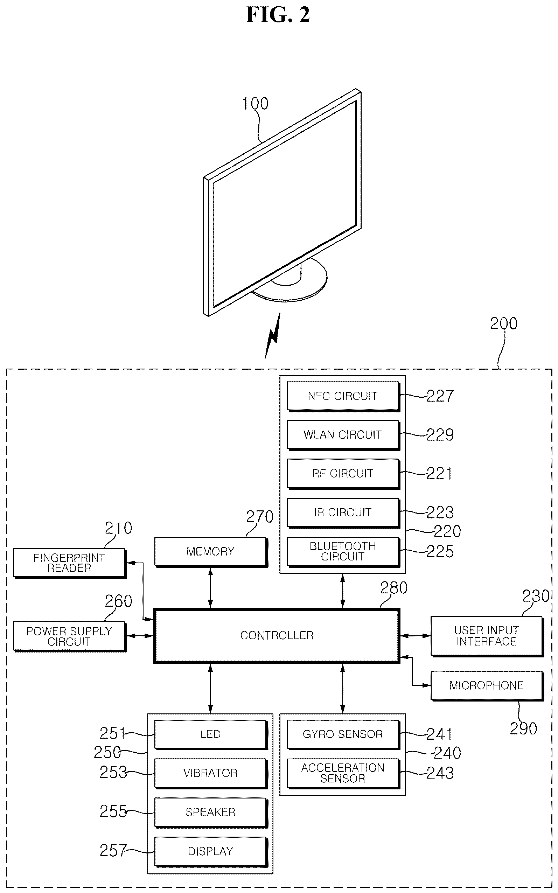

Next, a remote control device according to an embodiment of the present disclosure will be described with reference to FIGS. 2 to 3.

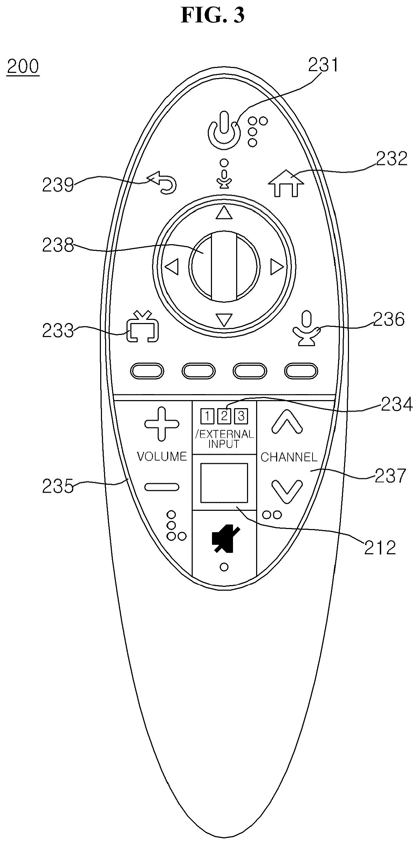

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication unit 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication unit 225.

Also, the microphone 290 of the remote control device 200 may obtain a speech.

A plurality of microphones 290 may be provided.

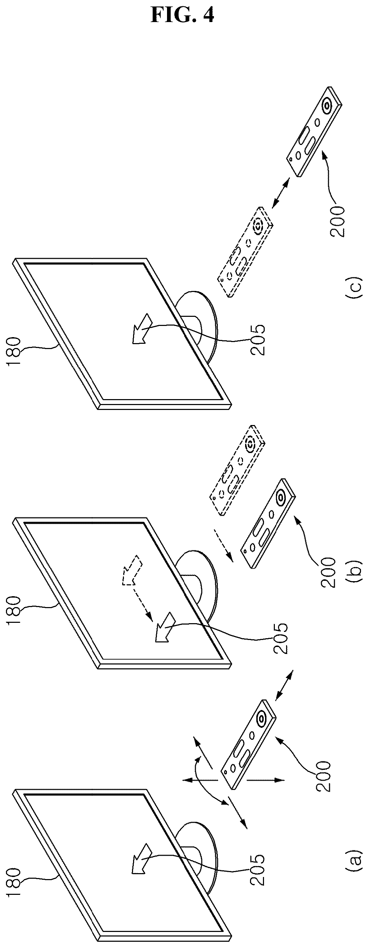

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

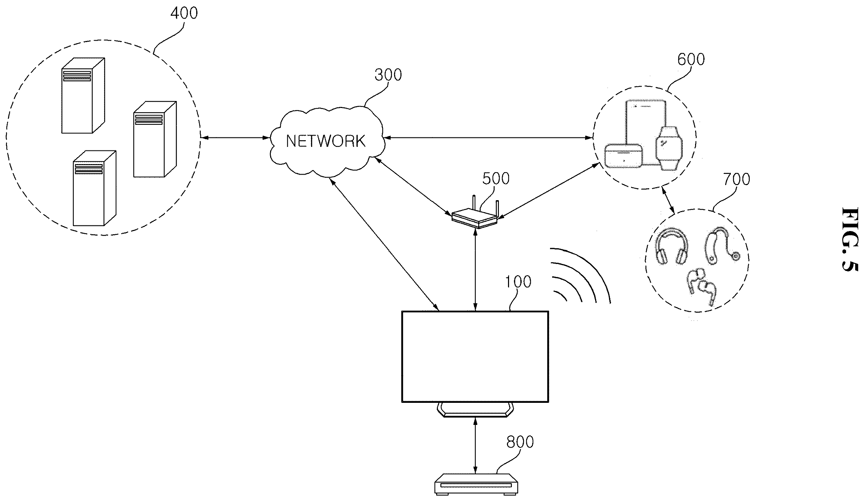

Fig. 5 is a diagram illustrating an example of a configuration of a system according to an embodiment of the present disclosure.

Referring to Fig. 5, the system may include a display device 100, at least one server 400, a router 500, a user terminal 600, an audio device 700, and/or a content providing device 800.

The display device 100 may transmit and receive signals to and from the server 400, the router 500, the user terminal 600, the audio device 700, and/or the content providing device 800.

The display device 100 may transmit and receive data to and from the server 400 via a network 300 such as the Internet. The display device 100 may transmit and receive data to and from the server 400 through the router 500.

The router 500 may be connected to a communication line installed at a location such as a home or office to transmit signals. The display device 100 may be positioned within a range capable of receiving the signals from the router 500.

The router 500 may receive signals from the display device 100, the user terminal 600, and the like that are communicatively connected to the router 500 and transmit the signals to the outside via a communication line. The router 500 may transmit the signals input through the communication line from the outside to the display device 100, the user terminal 600, and the like.

The display device 100 and the user terminal 600 may transmit and receive signals to and from each other in a state of being connected to a local area network through the router 500.

The user terminal 600 may transmit signals to the display device 100 through the server 400. The user terminal 600 may receive signals from the display device 100 through the server 400.

The user terminal 600 may communicate with the audio device 700. The user terminal 600 may communicate with the audio device 700 by using a short-range communication scheme. The user terminal 600 may communicate with the audio device 700 through pairing.

The display device 100 may broadcast a packet including data. In the present disclosure, description will be made based on an LE audio using Bluetooth Low Energy (BLE).

The display device 100 may broadcast a packet including information for an audio (hereinafter, referred to as an advertising packet). The advertising packet may include a unique identifier of a device providing audio, a unique identifier for distinguishing an audio stream, codec related information, information for a quality of the audio (e.g., a sampling rate, a bit rate, a number of channels, etc.), information for a timing of outputting the audio, information for encryption of audio data, and the like.

The display device 100 may broadcast a packet including audio data (hereinafter, referred to as an audio packet). The audio data contained in the audio packet may be named an audio stream. The audio data may be included in the audio packet in a form compressed by a codec.

Meanwhile, at least some of the data included in the advertising packet may be included in the audio packet. Meanwhile, at least some of the data included in the audio packet may be included in the advertising packet.

The display device 100 may encrypt audio data. The display device 100 may broadcast an audio packet including the encrypted audio data. For example, the display device 100 may encrypt the audio data by generating an encryption key corresponding to preset authentication information. Here, the authentication information may be constituted by characters, numbers, symbols, or a combination thereof. For example, the authentication information may be a Personal Identification Number (PIN).

The user terminal 600 may receive the packet broadcast from the display device 100. For example, the user terminal 600 may receive the broadcasted advertising packet. In this case, the user terminal 600 may transmit information required for receiving an audio to the audio device 700 based on data included in the advertising packet. For example, the information required for receiving the audio may include a unique identifier of a device providing audio, a unique identifier for distinguishing an audio stream, codec related information, information for a quality of the audio (e.g., a sampling rate, a bit rate, a number of channels, etc.), information for a timing of outputting the audio, information for encryption of audio data, authentication information, and the like.

The audio device 700 may receive the packet broadcasted from the display device 100. For example, the audio device 700 may receive the broadcasted audio packet based on the information required for receiving the audio received from the user terminal 600. In this case, the audio device 700 may output the audio based on the audio data included in the audio packet.

The audio device 700 may decrypt the audio data included in the audio packet. For example, the audio device 700 may decrypt the audio data by generating an encryption key corresponding to the authentication information received from the user terminal 600.

The display device 100 may receive a signal related to a content from the content providing device 800. For example, the display device 100 may receive a video signal, an audio signal, etc., related to the content from the content providing device 800. Here, the content providing device 800 may include a set-top box, a Blu-ray player, a DVD player, and the like.

Meanwhile, in the present disclosure, it is described as an example that the user terminal 600 provides the information required for receiving the audio to the audio device 700, but the present disclosure is not limited thereto.

According to an embodiment, the display device 100 and the audio device 700 may communicate with each other. In this case, the display device 100 may transmit the information required for receiving the audio to the audio device 700. That is, the audio device 700 may receive the information required for receiving the audio from the display device 100 that broadcasts the packet without going through the user terminal 600.

For example, the display device 100 may transmit, to the paired audio device 700, a unique identifier of a device providing an audio, a unique identifier for distinguishing an audio stream, codec related information, information for a quality of the audio (e.g., a sampling rate, a bit rate, a number of channels, etc.), information for a timing of outputting the audio, information for encryption of audio data, authentication information, and the like. The audio device 700 may receive the audio packet broadcasted from the display device 100 and output the audio corresponding to the audio data included in the audio packet, based on the information required for receiving the audio received from the display device 100.

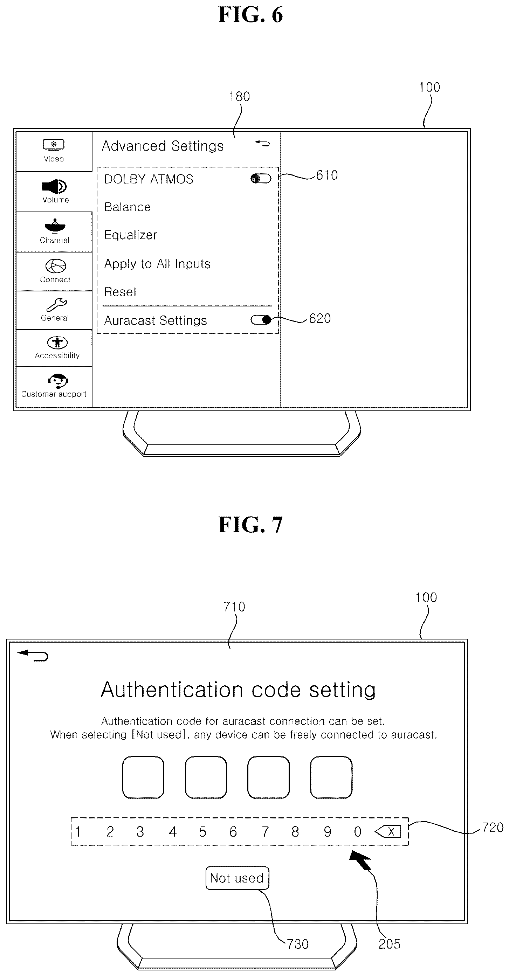

Figs 6 and 7 are diagrams referenced for describing a setting of an audio broadcasting function according to embodiments of the present disclosure.

Referring to Fig. 6, the display device 100 may output a user interface 610 for audio output. The user may control a setting for the audio output by using the user interface 610 for the audio output.

The display device 100 may activate or deactivate a function of broadcasting the audio signal (hereinafter, referred to as an audio broadcasting function). The display device 100 may broadcast the advertising packet and/or the audio packet in a state in which the audio broadcasting function is activated. Meanwhile, the display device 100 may periodically broadcast the advertising packet in the state in which the audio broadcasting function is activated.

The user may activate or deactivate the audio broadcasting function of the display device 100 using an audio broadcasting function-related object 620 included in the screen output through the display 180.

Referring to Fig. 7, the display device 100 may output a screen for setting authentication information used for encrypting audio data (hereinafter, referred to as an authentication information setting screen) 710.

The authentication information setting screen 710 may include a user interface 720 for setting the authentication information. The user may input the authentication information by selecting numbers included in the user interface 720 for setting the authentication information using a pointer 205.

Meanwhile, the user may not set the authentication information by selecting a non-setting related object 730 included in the authentication information setting screen 710 using the pointer 205. When the authentication information is not set, the display device 100 may broadcast an audio packet including unencrypted audio data.

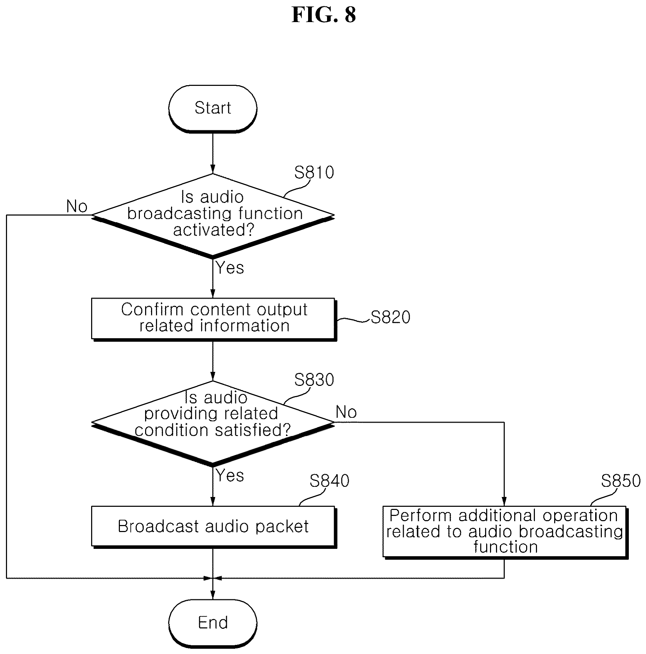

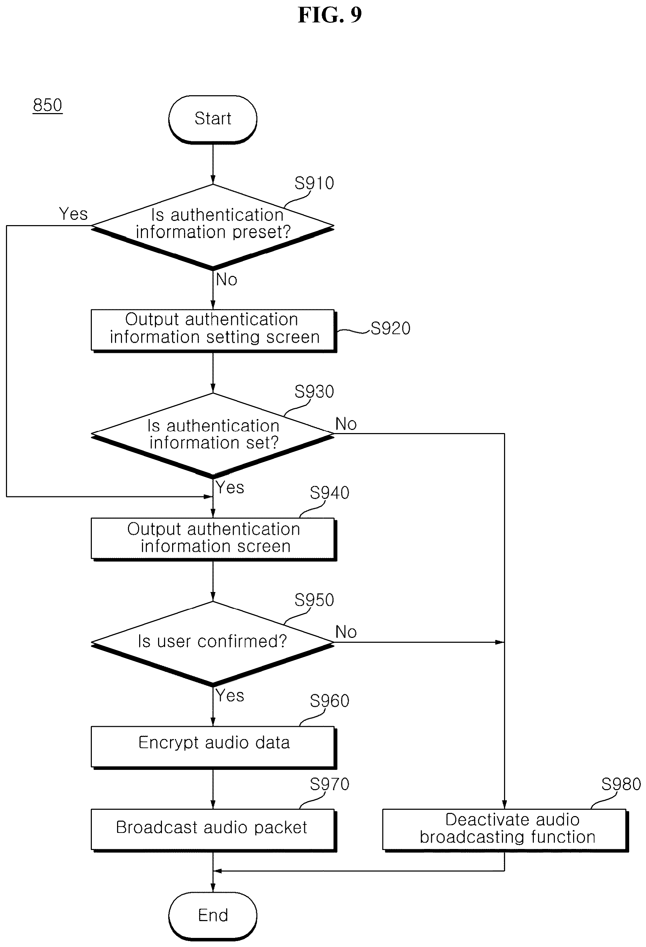

Figs. 8 and 9 are flowcharts for an operating method of a display device according to an embodiment of the present disclosure.

Referring to FIG. 8, the display device 100 may determine whether the audio broadcasting function is activated in operation S810.

In operation S820, the display device 100 may confirm information related to an output of a content through the display 180 in a state in which when the audio broadcasting function is activated. For example, the display device 100 may confirm the information related to the output of the content through the display 180 based on data stored in the memory 140, data received from the server 400, data acquired through Internet search, and the like.

The information related to the output of the content may include information for an application executed for the output of the content, information for a content to be output, and the like. For example, the information for the application may include a name, a type, and a provider of the application, whether an authorization (e.g., account login) is required for use of a service, and the like. For example, the information for the content may include a title, a provider, a genre, and a language of the content, an account restriction related to the output of the content, an age restriction, and the like.

According to one embodiment, the display device 100 may confirm the information for the application in response to the execution of the application for the output of the content. The application for the output of the content may include an application providing an over-the-top media service (OTT service), an application providing real-time broadcasting, and the like. For example, when a predetermined application for the output of the content is executed in a foreground according to a user input, the display device 100 may confirm information for the predetermined application.

According to an embodiment, the display device 100 may confirm the information for the content to be output in response to the output of the content.

For example, when a predetermined content is selected according to the user input while the application providing the OTT service is executed, the display device 100 may confirmation information for the predetermined content selected as an output target.

For example, the display device 100 may confirm information for a predetermined content provided in a predetermined broadcasting channel while the application providing the real-time broadcasting is executed. In this case, the display device 100 may confirm information for a predetermined content provided in a predetermined broadcasting channel at a predetermined time based on an Electronic Program Guide (EPG) related to the real-time broadcasting.

Meanwhile, when the audio broadcasting function is activated while the predetermined application for the output of the content is executed, the display device 100 may confirm the information for the predetermined application. When the predetermined application for the output of the content, and the audio broadcasting function is activated while the predetermined content is output, the display device 100 may confirm the information for the predetermined application and the information for the predetermined content.

According to an embodiment, the display device 100 may request transmission of the information related to the output of the content to the server 400. For example, the display device 100 may request transmission of the information for the application executed in the foreground, the information for the content selected as the output target, and the like to a predetermined server 400 to which the display device 100 is connected. In this case, the predetermined server 400 to which the display device 100 is connected may be a server configured to process a request received from the display device 100 and provide a response to the request to the display device 100.

Meanwhile, the display device 100 may receive the information related to the output of the content from the server 400 corresponding to the application executed for the output of the content. For example, the display device 100 may request transmission of the information for the application to the server 400 providing the OTT service in response to the execution of the application providing the OTT service. For example, when a predetermined content is selected as the output target while the application providing the OTT service is executed, the display device 100 may request transmission of the information for the predetermined content which is the output target to the server 400 providing the OTT service.

According to an embodiment, when receiving a signal related to a content from a content providing device 800, the display device 100 may confirm information related to the output of the content based on data received from the content providing device 800. For example, the display device 100 may receive the information related to the output of the content from the content providing device 800 according to a preset communication standard.

According to an embodiment, the display device 100 may perform the information related to the output of the content based on an image output through the display 180. For example, the display device 100 may confirm the information related to the output of the content based on characters, numbers, symbols, and the like included in the image output through the display 180.

The display device 100 may process the image output through the display 180 using a learning model for processing the image stored in the memory 140. In this case, the learning model for processing the image may include a learning model for identifying individual applications, a learning model for identifying individual contents, a learning model for identifying an object included in the image.

For example, the display device 100 may identify an object included in an image using a learning model for recognizing an object stored in the memory 140. In this case, the display device 100 may confirm the information related to the output of the content based on identified objects (e.g., characters, numbers, symbols, persons, objects, etc.).

Here, the learning model may refer to a trained artificial neural network. The learning model may be used to infer a result value for new input data other than training data, and the inferred value may be used as a basis of a determination for performing any operation.

An Artificial Neural Network (ANN) is a model used in machine learning and may refer to a universal model having a problem-solving model constituted by artificial neurons (nodes) that form a network through a synaptic connection. The artificial neural network (ANN) may be defined by connection patterns between neurons in different layers, a learning process that updates model parameters, and an activation function that generates output values.

The artificial neural network (ANN) may include an input layer, an output layer, and optionally one or more hidden layers. Each layer may include one or more neurons, and the artificial neural network may include synapses connecting the neurons. In the artificial neural network, each neuron may output a function value of an activation function for input signals, weights, and biases input through the synapses.

The model parameters refer to parameters that are determined through learning, including weights of synaptic connections and biases of neurons. In addition, hyperparameters refer to parameters that must be set before learning in machine learning algorithms, including a learning rate, a number of iterations, a mini-batch size, an initialization function, and the like.

An objective of learning of the artificial neural network may be regarded as determining a model parameter that minimizes a loss function. The loss function may be used as an indicator for determining an optimal model parameter during a learning process of the artificial neural network.

The machine learning may be classified into supervised learning, unsupervised learning, and reinforcement learning according to a learning scheme.

The supervised learning refers to a method for training the artificial neural network in a state where a label for the training data is given, and the label may refer to a ground truth (or a result value) which the artificial neural network should infer when the training data is input to the artificial neural network. The unsupervised learning may refer to a method for training the artificial neural network in a state where no label for the training data is given. The reinforcement learning may refer to a learning method for training an agent defined in any environment to select an action or a sequence of actions that maximizes cumulative rewards in each state.

Machine learning implemented as a deep neural network (DNN), which includes a plurality of hidden layers among artificial neural networks, is also referred to as deep learning, and the deep learning is a part of the machine learning. Hereinafter, the machine learning is used as a meaning including the deep learning.

According to an embodiment, the display device 100 may transmit the image output through the display 180 to the server 400. The server 400 may process the image received from the display device 100 to acquire the information related to the output of the content. In this case, the server 400 may be a server that processes the image output through the display 180 using the learning model. The server 400 may transmit the acquired information related to the output of the content to the display device 100.

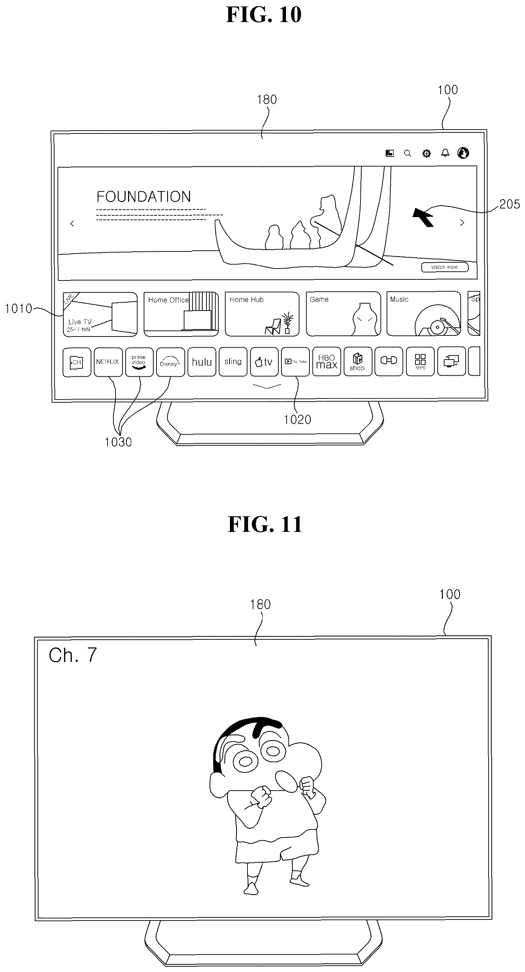

Referring to FIG. 10, the display device 100 may output a home screen of the display device 100 through the display 180. The home screen of the display device 100 may include objects corresponding to applications installed in the display device 100, respectively. For example, the objects included in the home screen of the display device 100 may correspond to an application 1010 providing real-time broadcasting, an application 1020 providing a first OTT service, an application 1030 providing a second OTT service, and the like.

The display device 100 may execute an application selected by a user. In this case, the display device 100 may confirm information for the executed application.

For example, when executing the application 1010 providing the real-time broadcasting, the display device 100 may confirm that a type of application is the real-time broadcasting, that no authorization (e.g., account login) is required for use of the service, and the like.

For example, when executing the first OTT service, the display device 100 may confirm that the type of application is the OTT service, that the authorization (e.g., account login) for the use of the service is optionally required, and the like.

For example, when executing the second OTT service, the display device 100 may confirm that the type of application is the OTT service, that the authorization (e.g., account login) for the use of the service is required, and the like.

Referring to Fig. 11, the display device 100 may output a content of a first channel through the display 180 while the application providing the real-time broadcasting is executed.

The display device 100 may confirm information for the content output from the first channel. For example, the display device 100 may confirm that, for the content provided in the first channel, a content genre is a children's content, there is no age restriction prohibiting output to viewers below a specific age, and the like.

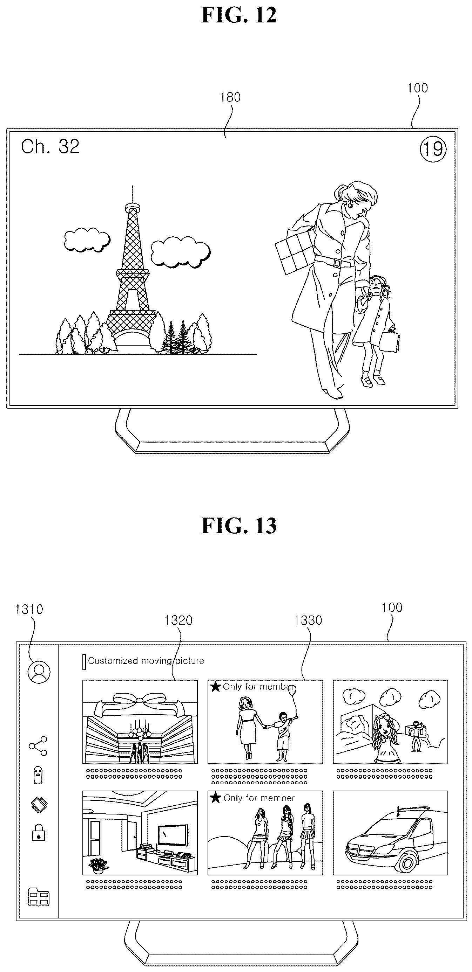

Referring to Fig. 12, the display device 100 may output a content of a second broadcasting channel through the display 180 while the application providing the real-time broadcasting is executed.

The display device 100 may confirm information for the content output from the second channel. For example, the display device 100 may confirm that, for the content provided in the first channel, the content genre is a movie, there is an age restriction prohibiting output to viewers below a specific age, and the like.

Referring to Fig. 13, the display device 100 may output a home screen of the OTT service through the display 180 while the application providing the OTT service is executed.

Objects included in the home screen of the OTT service may correspond to a user account 1310, contents 1320 and 1330 provided through the OTT service, and the like.

The display device 100 may output a content selected by the user. In this case, the display device 100 may confirm information for a content which is an output target. For example, when outputting a first content 1320, the display device 100 may confirm that the content genre is a music video, there is no account restriction allowing output to viewers for a specific account, and the like. For example, when outputting a second content 1330, the display device 100 may confirm that the content genre is a drama, there is an account restriction allowing output to viewers for a specific account, and the like.

Referring back to Fig. 8, in operation S830, the display device 100 may determine whether a predetermined condition related to providing an audio of the content output through the display 180 is satisfied, based on the information related to the output of the content. Here, the predetermined condition related to providing the audio of the content may refer to a condition in which broadcasting the audio of the content without encryption is permitted.

The display device 100 may determine whether a predetermined condition is satisfied based on at least one of the information for the application and the information related to the output of the content.

For example, if the application executed for the output of the content is an application that requires the authorization for the use of the service (e.g., account login), the predetermined condition may not be satisfied. Meanwhile, when the application executed for the output of the content is an application that unnecessarily requires the authorization for the use of the service (e.g., account login), the predetermined condition may be satisfied.

For example, when the content which is the output target is a content that requires the authorization for the output of the content due to the account restriction, the age restriction, or the like, the predetermined condition may not be satisfied. Meanwhile, when the content which is the output target is a content that does not require the authorization of the output of the content, the predetermined condition may be satisfied.

In operation S840, the display device 100 may broadcast an audio packet including audio data in response to the satisfaction of the predetermined condition related to provision of the audio of the content. In this case, the audio data included in the audio packet may be unencrypted audio data of the content output through the display 180.

In operation S850, the display device 100 may perform an additional operation related to the audio broadcasting function in response to dissatisfaction of the predetermined condition related to the provision of the audio of the content. For example, the display device 100 may perform a predetermined operation related to encryption of the audio data in response to the dissatisfaction of the predetermined condition related to the provision of the audio of the content. This will be described with reference to FIG. 9.

Referring to FIG. 9, the display device 100 may determine, in operation S910, whether authentication information used for encryption of the audio data is preset.

The display device 100 may output, in operation S920, an authentication information setting screen through the display 180 in response to non-setting of the authentication information. In this case, the display device 100 may output a user interface for setting the authentication information through the display 180.

The display device 100 may determine, in operation S930, whether the authentication information is set. For example, the display device 100 may set the authentication information according to a user input received through a user input interface 150. For example, the display device 100 may determine that setting of the authentication information is unsuccessful when a user input for setting the authentication information is not received for a predetermined time or longer.

The display device 100 may output, in operation S940, a screen displaying the authentication information (hereinafter, referred to as an authentication information display screen) when the authentication information is set. The authentication information display screen may include a user interface for changing the authentication information, preset authentication information, and the like.

The display device 100 may determine, in operation S950, whether user confirmation for encryption of the audio data is input. For example, the display device 100 may determine that user confirmation for the encryption of the audio data is input in response to a user input selecting an object corresponding to a user confirmation included in an authentication information display screen.

According to an embodiment, an operation in which the display device 100 outputs the authentication information display screen may also be omitted. For example, when the authentication information is set, the display device 100 may output a message for inputting the authentication information through the display 180 so that the user inputs the authentication information into the user terminal 600.

The message for inputting the authentication information may be output as a pop-up window on a screen currently being output through the display 180. For example, the message for inputting the authentication information may be output as the pop-up window on a screen outputting an image of a content.

The display device 100 may receive the user confirmation for the encryption of the audio data in response to a user input for the message for inputting the authentication information.

The display device 100 may encrypt the audio data of the content in operation S960. For example, the display device 100 may encrypt the audio data by generating an encryption key corresponding to the preset authentication information.

The display device 100 may broadcast an audio packet including the encrypted audio data in operation S970.

According to an embodiment, the display device 100 may perform encryption of the audio data of the content and broadcasting of the audio packet containing the encrypted audio data before the user confirmation for the encryption of the audio data is input, in a state where the authentication information is set. In this case, the display device 100 may output the image of the content through the display 180.

According to an embodiment, the display device 100 may suspend the encryption of the audio data of the content and the broadcasting of the audio packet containing the encrypted audio data before the user confirmation for the encryption of the audio data is input, in the state where the authentication information is set. In this case, the display device 100 may suspend the output of the image of the content through the display 180.

In operation S980, the display device 100 may deactivate the audio broadcasting function when the authentication information is not set or when the user confirmation for the encryption of the audio data is not received. In this case, the display device 100 may output, through the display 180, a message for deactivation of the audio broadcasting function.

Meanwhile, the display device 100 may output an audio of a content according to a setting for an output of an audio used immediately before the audio broadcasting function is activated. For example, the display device 100 may output the audio of the content through a speaker 185 according to a preset volume in response to deactivation of the audio broadcasting function.

According to an embodiment, when the authentication information is not set, or when the user confirmation for the encryption of the audio data is not received, the display device 100 may also perform switching of the screen output through the display 180, switching of the application executed in the foreground, and the like. For example, the display device 100 may output the screen output through the display 180 again immediately before a content which is an output target is selected. For example, the display device 100 may re-execute the application executed in the foreground immediately before an application for the output of the content is executed.

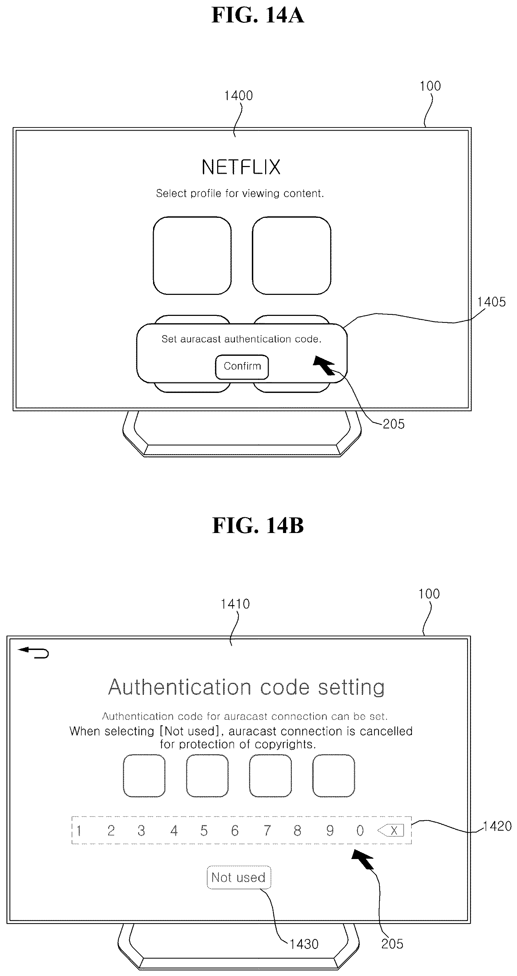

Referring to Figs. 14A and 14B, the application providing the OTT service may be executed for the output of the content. In this case, when the authorization for the use of the service (e.g., account login) is required for the application providing the OTT service, a predetermined condition may not be satisfied.

The display device 100 may output a message 1405 for the setting of the authentication information through the display 180 in response to the non-setting of the authentication information. For example, the display device 100 may output the message 1405 for the setting the authentication information as the pop-up window while an OTT service screen 1400 is output through the display 180. In this case, when the user selects a confirmation object included in the message 1405 for the setting of the authentication information, the display device 100 may output an authentication information setting screen 1410.

The authentication information setting screen 1410 may include a user interface 1420 for setting the authentication information. The user may input the authentication information by selecting numbers included in the user interface 1420 for setting the authentication information using the pointer 205.

Meanwhile, the user may not set the authentication information by selecting a non-setting related object 1430 included in the authentication information setting screen 1410 using the pointer 205. In this case, when the setting of the authentication information is unsuccessful due to the selection of the non-setting related object 1430, the audio broadcasting function may be deactivated.

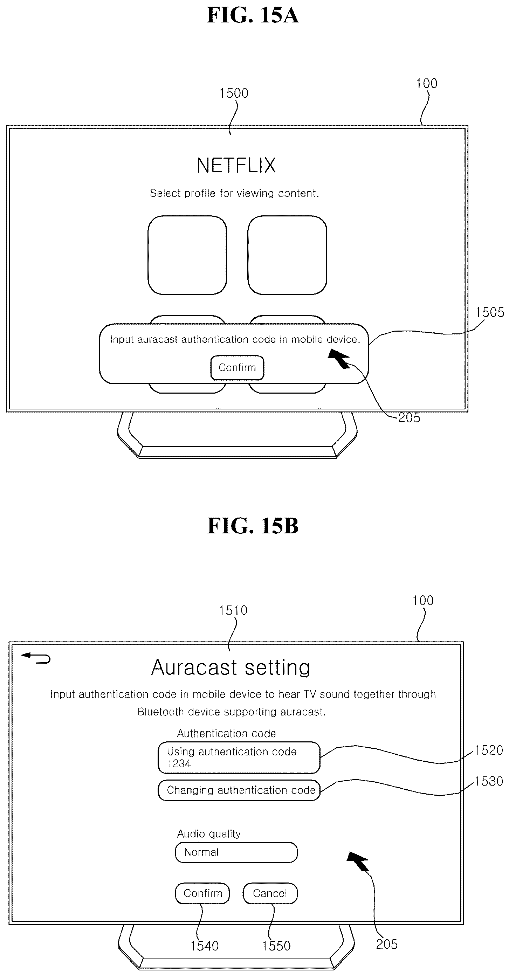

Referring to Fig. 15A, the application providing the OTT service may be executed for the output of the content. In this case, when the authorization for the use of the service (e.g., account login) is required for the application providing the OTT service, the predetermined condition may not be satisfied.

The display device 100 may output a message 1505 for an input of the authentication information through the display 180 in response to presetting of the authentication information. For example, the display device 100 may output a message 1505 for the input of the authentication information as the pop-up window while an OTT service screen 1500 is output through the display 180. In this case, the user may input the user confirmation for the encryption of the audio data by selecting a confirmation object included in the message 1505 for the input of the authentication information.

Referring to FIG. 15B, when the user selects the confirmation object included in the message 1505 for the input of the authentication information, the display device 100 may output an authentication information display screen 1510.

The authentication information display screen 1510 may include preset authentication information 1520, a user interface 1520 for changing the authentication information, a user interface for setting an audio quality, and the like.

The user may input the user confirmation for the encryption of the audio data by selecting a confirmation object 1540 included in the authentication information display screen 1510 by using the pointer 205.

Meanwhile, when the user selects a cancel object 1550 included in the authentication information display screen 1510 by using the pointer 205, the user confirmation for the encryption of the audio data is not input, so the audio broadcasting function may be deactivated.

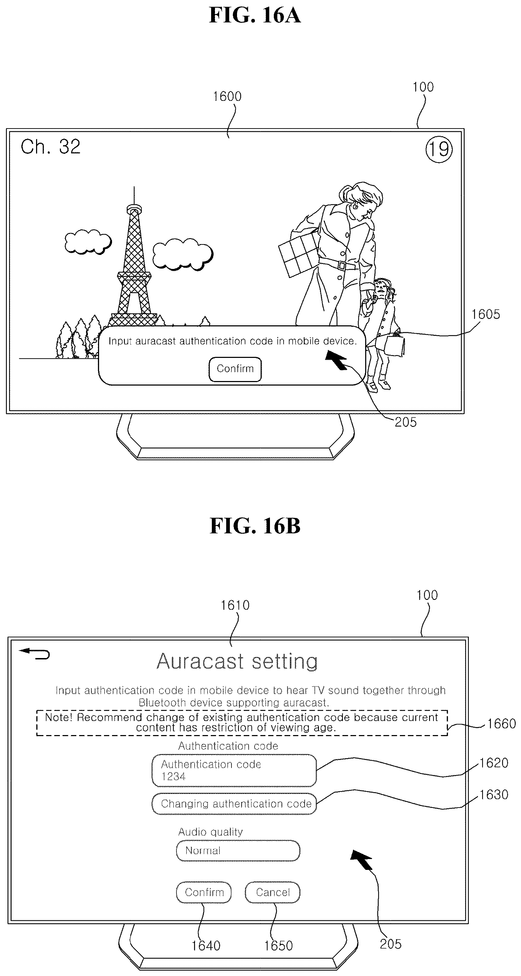

Referring to Fig. 16A, the application providing the real-time broadcasting may be executed for the output of the content. In this case, since the application providing the real-time broadcasting does not require the authorization for the use of the service (e.g., account login), a predetermined condition may be satisfied.

Meanwhile, while the application providing the real-time broadcasting is executed, when there is an age restriction for a predetermined content provided in a predetermined channel, the predetermined condition may not be satisfied.

The display device 100 may output a message 1605 for an input of the authentication information through the display 180 in response to presetting of the authentication information. For example, the display device 100 may output a message 1605 for the input of the authentication information as the pop-up window while the real-time broadcasting screen 1500 is output through the display 180. In this case, the user may input the user confirmation for the encryption of the audio data by selecting a confirmation object included in the message 1605 for the input of the authentication information.

Referring to FIG. 16B, when the user selects a confirmation object included in the message 1605 for the input of the authentication information, the display device 100 may also output an authentication information display screen 1610.

The authentication information display screen 1610 may include preset authentication information 1620, a user interface 1620 for changing the authentication information, a user interface for setting an audio quality, and the like.

Meanwhile, the authentication information display screen 1610 may further include a message corresponding to dissatisfaction of the predetermined condition. For example, when the predetermined condition is not satisfied due to the age restriction related to the output of the content, a message 1660 corresponding to the age restriction may be included in the authentication information display screen 1610.

The user may input the user confirmation for the encryption of the audio data by selecting a confirmation object 1640 included in the authentication information display screen 1610 by using the pointer 205. Meanwhile, when the user selects a cancel object 1650 included in the authentication information display screen 1610 by using the pointer 205, the user confirmation for the encryption of the audio data is not input, so the audio broadcasting function may be deactivated.

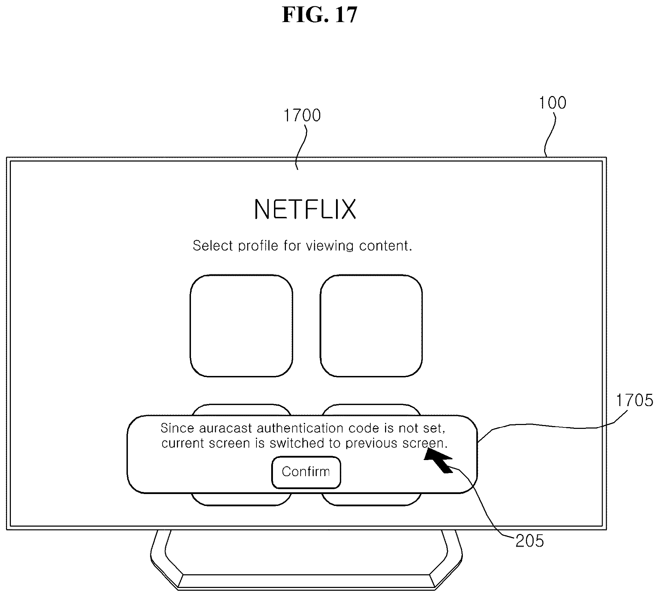

Referring to Fig. 17, the display device 100 may output a message 1705 for the switching of the screen through the display 180 in response to a failure for the setting of the authentication information. For example, the display device 100 may output a message 1705 for the switching of the screen as the pop-up window while an OTT service screen 1700 is output through the display 180.

In this case, when the user selects a confirmation object included in the message 1705 for the switching of the screen, the display device 100 may perform the switching of the screen output through the display 180, the switching of the application executed in the foreground, and the like. For example, the display device 100 may terminate execution of the application providing the OTT service. In this case, the display device 100 may output the screen output through the display 180 again immediately before executing the application providing the OTT service.

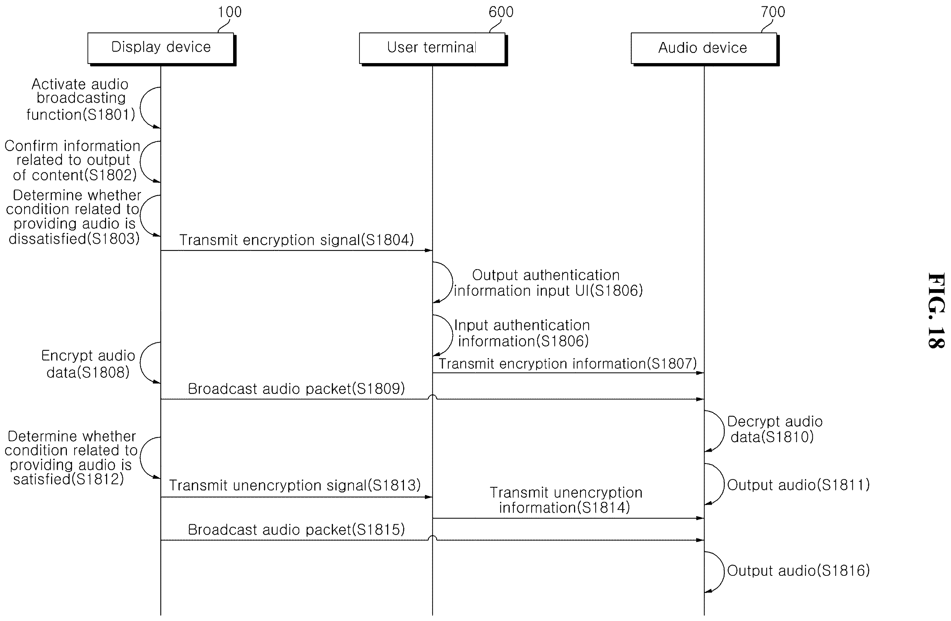

Fig. 18 is a flowchart of an operating method of a system according to an embodiment of the present disclosure.

Referring to Fig. 18, the display device 100 may activate the audio broadcasting function in operation S1801.

The display device 100 may confirm information related to an output of a content through the display 180 in operation S1802.

The display device 100 may determine, in operation S1803, that the predetermined condition related to providing the audio of the content output through the display 180 is dissatisfied, based on the information related to the output of the content. For example, when the application executed for the output of the content is an application providing the OTT service, which requires the authorization for the use of the service (e.g., account login), the display device 100 may determine that the predetermined condition is dissatisfied.

The display device 100 may transmit, in operation S1804, a signal corresponding to encryption of audio data (hereinafter, referred to as an encryption signal) to the user terminal 600 through the network 300.

For example, the display device 100 may transmit the encryption signal to the user terminal 600 based on data for at least one user terminal 600 stored in the memory 140. Here, the data for at least one user terminal 600 may include a type, an identifier, an IP address, a MAC address, etc., of the user terminal 600.

According to an embodiment, the display device 100 may confirm the user terminal 600 connected to a local network through the router 500. In this case, the display device 100 may transmit a signal to the user terminal 600 connected to the local network. Meanwhile, the display device 100 may also confirm, among the user terminals 600 connected to the local network, a user terminal 600 that is communicating through a predetermined application for mutual communication, and transmit a signal to the user terminal 600 which is communicating through the predetermined application.

According to an embodiment, the display device 100 may transmit the encryption signal to the server 400 through the network 300. In this case, the server 400 may forward the encryption signal received from the display device 100 to the user terminal 600.

In operation S1805, when the encryption signal is received, the user terminal 600 may output the user interface for the input of the authentication information.

For example, when the encryption signal is received, the user terminal 600 may output a screen for selecting a device that broadcasts an audio signal according to a deep link scheme. In this case, the user terminal 600 may output a list of devices corresponding to the received advertising packet. When the user selects the display device 100 among the devices included in the list, the user terminal 600 may output the user interface for the input of the authentication information.

According to an embodiment, the display device 100 may include, in the encryption signal, information required for receiving the audio, which does not include the preset authentication information. In this case, the user terminal 600 may output the user interface for the input of the authentication information in response to the reception of the encryption signal.

For example, the display device 100 may identify an advertising packet broadcasted from the display device 100 among the received advertisement packets based on the information required for receiving the audio included in the encrypted signal. In this case, the display device 100 may output the user interface for the input of the authentication information in response to the advertising packet broadcasted from the display device 100.

For example, the display device 100 may output the user interface for the input of the authentication information without receiving the advertising packet based on the information required for receiving the audio included in the encryption signal.

The user terminal 600 may receive the authentication information input from the user in operation S1806. The authentication information input into the user terminal 600 may be stored in the user terminal 600. For example, the authentication information may be stored in the user terminal 600 by matching with a unique identifier of the display device 100.

The user terminal 600 may transmit, in operation S1807, the information for the encryption of the audio data to the audio device 700. For example, the information for the encryption of the audio data may include information required for receiving the audio, including the authentication information.

According to an embodiment, when the authentication information is pre-stored in the user terminal 600, the user terminal 600 may transmit the information for the encryption of the audio data to the audio device 700 in response to the reception of the encryption signal. In this case, the output of the user interface for inputting the authentication information and the input of the authentication information may be omitted.

The display device 100 may encrypt the audio data of the content in operation S1808.

The display device 100 may broadcast an audio packet including the encrypted audio data in operation S1809.

The audio device 700 may decrypt the audio data of the content by receiving the audio packet broadcasted from the display device 100 in operation S1810. For example, the audio device 700 may decrypt the audio data by generating an encryption key corresponding to the authentication information received from the user terminal 600.

The audio device 700 may output an audio corresponding to the decrypted audio data in operation S1811.

In operation S1812, the display device 100 may determine that the predetermined condition related to providing the audio of the content output through the display 180 is satisfied, based on the information related to the output of the content. For example, when the application executed for the output of the content is an application providing the real-time broadcasting, which does not require the authorization for the use of the service (e.g., account login), the display device 100 may determine that the predetermined condition is satisfied.

The display device 100 may transmit, in operation S1813, a signal corresponding to non-encryption of audio data (hereinafter, referred to as a non-encryption signal) to the user terminal 600 through the network 300. According to an embodiment, the display device 100 may include the information required for receiving the audio in the non-encryption signal.

The user terminal 600 may transmit, in operation S1814, the information for the non-encryption of the audio data to the audio device 700 based on the reception of the non-encryption signal. For example, the information for the encryption of the audio data may include the information required for receiving the audio, which does not include the authentication information.

The display device 100 may broadcast an audio packet including the unencrypted audio data in operation S1815.
The audio device 700 may output, in operation S1816, an audio corresponding to the unencrypted audio data included in the audio packets broadcasted from the display device 100.

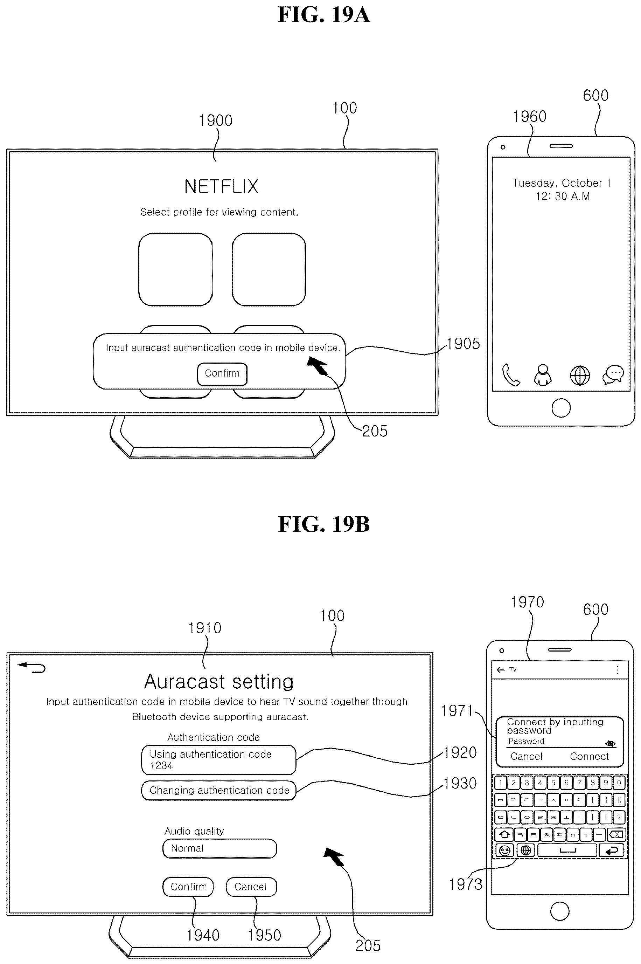

Referring to Figs. 19A and 19B, the application providing the OTT service may be executed for the output of the content. In this case, when the authorization for the use of the service (e.g., account login) is required for the application providing the OTT service, the predetermined condition may not be satisfied.

The display device 100 may output a message 1905 for an input of the authentication information through the display 180 in response to presetting of the authentication information. For example, the display device 100 may output a message 1905 for the input of the authentication information as the pop-up window while an OTT service screen 1900 is output through the display 180.

When the user selects a confirmation object included in the message 1905 for the input of the authentication information, the display device 100 may output an authentication information display screen 1910. The authentication information display screen 1910 may include preset authentication information 1920, a user interface 1920 for changing the authentication information, a user interface for setting an audio quality, and the like.

The display device 100 may transmit the encryption signal to the user terminal 600 through the network 300 in response to dissatisfaction of the predetermined condition. In this case, the user terminal 600 may output a screen 1970 for inputting the authentication information in response to the reception of the encryption signal which does not include the authentication information. The screen 1970 for inputting the authentication information may include user interfaces 1971 and 1973 for inputting the authentication information. The user may input the authentication information into the user terminal 600 by using user interfaces 1971 and 1973.

According to an embodiment, when the input of the authentication information is completed, the user terminal 600 may transmit a signal corresponding to the input of the authentication information to the display device 100 through the network 300.

When receiving the signal corresponding to the input of the authentication information from the user terminal 600, the display device 100 may determine that the user confirmation for the encryption of the audio data is received. In this case, the display device 100 may terminate the output of the authentication information display screen 1910 and perform a subsequent operation for outputting the content.

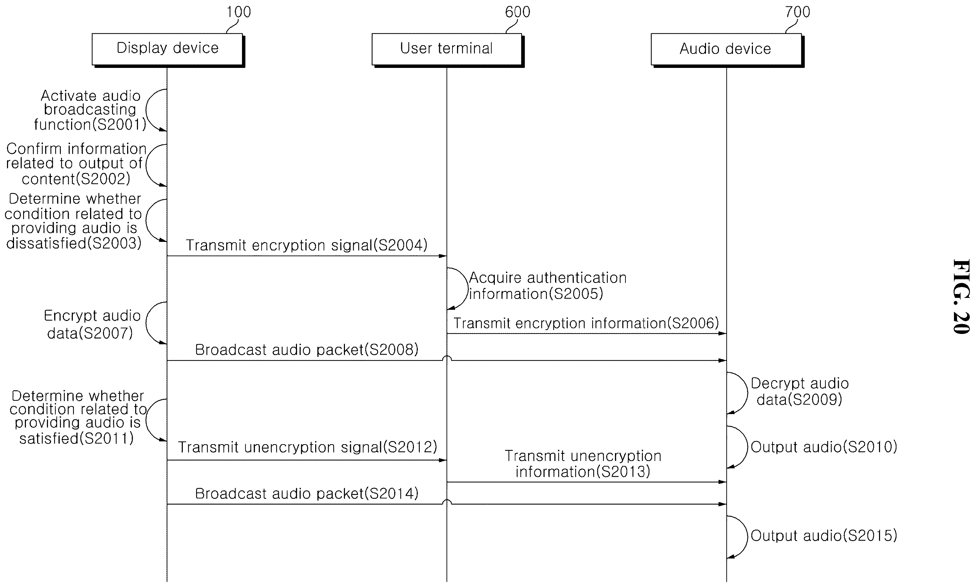

Fig. 20 is a flowchart of an operating method of a system according to another embodiment of the present disclosure.

Referring to Fig. 20, the display device 100 may activate the audio broadcasting function in operation S2001.

The display device 100 may confirm information related to an output of a content through the display 180 in operation S2002.

The display device 100 may determine, in operation S2003, that the predetermined condition related to providing the audio of the content output through the display 180 is dissatisfied, based on the information related to the output of the content. For example, when a content which is an output target is a content that requires the authorization for the output of the content due to the account restriction, the age restriction, or the like, the display device 100 may determine that the predetermined condition is dissatisfied.

The display device 100 may transmit, in operation S2004, the encryption signal to the user terminal 600 through the network 300. In this case, the display device 100 may include, in the encryption signal, information required for receiving the audio, including preset authentication information.

The display device 100 may acquire, in operation S2005, authentication information from the encryption signal.

The user terminal 600 may transmit, in operation S2006, information for encryption of audio data to the audio device 700. For example, the information for the encryption of the audio data may be the information required for receiving the audio, including the authentication information.

The display device 100 may encrypt, in operation S2007, audio data of a content.

The display device 100 may broadcast, in operation S2008, am audio packet including the encrypted audio data.

The audio device 700 may decrypt, in operation S2009, the audio data of the content by receiving the audio packet broadcasted from the display device 100.

The audio device 700 may output, in operation S2010, an audio corresponding to the decrypted audio data.

The display device 100 may determine, in operation S2011, that the predetermined condition related to providing the audio of the content output through the display 180 is satisfied, based on the information related to the output of the content. For example, when a content which is an output target is a content that does not require the authorization for the output of the content, the display device 100 may determine that the predetermined condition is satisfied.

The display device 100 may transmit, in operation S2012, a non-encryption signal to the user terminal 600 through the network 300. According to an embodiment, the display device 100 may include the information required for receiving the audio in the non-encryption signal.

The user terminal 600 may transmit, in operation S2013, information for non-encryption of the audio data to the audio device 700 based on the reception of the non-encryption signal. For example, the information for the non-encryption of the audio data may be information required for receiving the audio, not including the authentication information.

The display device 100 may broadcast, in operation S2014, an audio packet including unencrypted audio data.

The audio device 700 may output, in operation S2015, an audio corresponding to the unencrypted audio data included in the audio packets broadcasted from the display device 100.

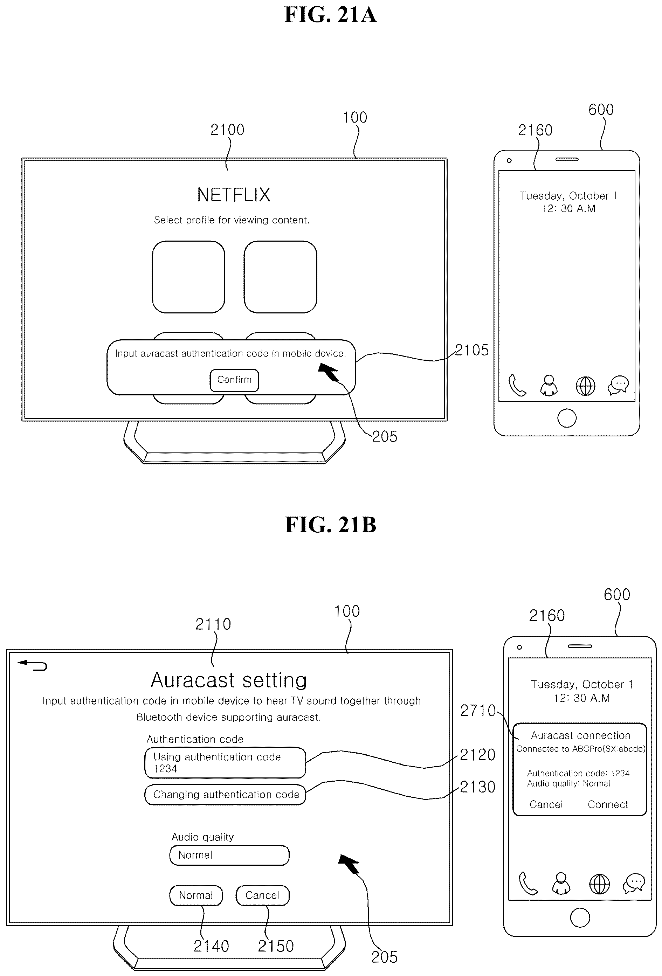

Referring to Figs. 21A and 21B, the application providing the OTT service may be executed for the output of the content. In this case, when the authorization for the use of the service (e.g., account login) is required for the application providing the OTT service, the predetermined condition may not be satisfied.

The display device 100 may output a message 2105 for an input of the authentication information through the display 180 in response to presetting of the authentication information. For example, the display device 100 may output the message 2105 for the input of the authentication information as the pop-up window while an OTT service screen 2100 is output through the display 180.

When the user selects a confirmation object included in the message 2105 for the input of the authentication information, the display device 100 may output an authentication information display screen 2110. The authentication information display screen 2110 may include preset authentication information 2120, a user interface 2120 for changing the authentication information, a user interface for setting an audio quality, and the like.

The display device 100 may transmit the encryption signal to the user terminal 600 through the network 300 in response to dissatisfaction of the predetermined condition. In this case, the user terminal 600 may output a screen 2170 for confirming the authentication information in response to the reception of the encryption signal which includes the authentication information.

For example, the user terminal 600 may output the screen 2170 for forming the authentication information as the pop-up window while a home screen 2160 is output. In this case, when the user selects a confirmation object included in the screen 2170 for confirming the authentication information, the user terminal 600 may transmit the information for the encryption of the audio data to the audio device 700. Meanwhile, when the user selects a cancel object included in the screen 2170 for confirming the authentication information, the user terminal 600 may output a screen for inputting the authentication information.

Meanwhile, the user terminal 600 may output a screen 2170 for confirming the authentication information in response to the reception of the encryption signal which does not include the authentication information while the authentication information is pre-stored in the user terminal 600. For example, the user terminal 600 may confirm whether authentication information corresponding to the unique identifier of the display device 100 included in the encryption signal is stored in the user terminal 600. In this case, when the authentication information corresponding to the unique identifier of the display device 100 is stored in the user terminal 600, a screen for confirming authentication information pre-stored in the user terminal 600 may be output.

According to an embodiment, when selecting a confirmation object included in the screen 2170 for confirming the authentication information, the user terminal 600 may transmit a signal corresponding to the input of the authentication information to the display device 100 through the network 300.

When receiving the signal corresponding to the input of the authentication information from the user terminal 600, the display device 100 may determine that the user confirmation for the encryption of the audio data is received. In this case, the display device 100 may terminate the output of the authentication information display screen 2110 and perform a subsequent operation for outputting the content.

As described above, according to at least one embodiment of the present disclosure, various information related to the output of the content may be utilized in determining whether to broadcast the audio of the content as it is.

Further, according to at least one embodiment of the present disclosure, it may be determined whether to encrypt the audio data prior to broadcasting the audio of the content.

In addition, according to at least one embodiment of the present disclosure, when the encryption of the audio data is required, a user interface for setting the authentication information used for the encryption may be provided.

Further, according to at least one embodiment of the present disclosure, information for broadcasting of the audio of the content may be provided to the user terminal through the network.

In addition, according to at least one embodiment of the present disclosure, inappropriate broadcasting of the audio of the content may be blocked, thereby preventing occurrence of problems related to digital rights management DRM, protection of minors, and the like.

Referring to Figs. 1 to 21B, a display device according to an aspect of the present disclosure may include: a display; a wireless communication interface; and a controller, and the controller may confirm information related to an output of a content through the display, based on activation of a predetermined function of broadcasting an audio packet including audio data through the wireless communication interface, determine whether a predetermined condition related to providing an audio of a predetermined content output through the display is satisfied, based on the information related to the output of the content, broadcast a first audio packet including audio data of the predetermined content through the wireless communication interface, based on satisfaction of the predetermined condition, and perform a predetermined operation related to encryption of the audio data of the predetermined content based on dissatisfaction of the predetermined condition.

Further, according to an aspect of the present disclosure, the controller may confirm, in response to execution of an application for outputting of the content through the display while the predetermined function is activated, information for the executed application among the information related to the output of the content, determine that the predetermined condition is satisfied, based on the executed application being a first application that does not require or optionally requires an authorization of use of a service, and determine that the predetermined condition is not satisfied, based on the executed application being a second application that requires the authorization of the use of the service.

In addition, according to an aspect of the present disclosure, the controller may confirm, in response to the activation of the predetermined function while the application for outputting the content through the display is executed, the information for the executed application among the information related to the output of the content, determine that the predetermined condition is satisfied, based on the executed application being the first application that does not require or optionally requires the authorization of the use of the service, and determine that the predetermined condition is not satisfied, based on the executed application being the second application that requires the authorization of the use of the service.

Further, according to an aspect of the present disclosure, the controller may confirm, in response to the output of the content while the predetermined function is activated, information for the predetermined content among the information related to the output of the content, determine that the predetermined condition is satisfied, based on the predetermined content being a first content that does not require an authorization of the output of the content, and determine that the predetermined condition is not satisfied, based on the predetermined content being a second content that requires the authorization of the output of the content.

Further, according to an aspect of the present disclosure, the controller may confirm, in response to the activation of the predetermined function while the predetermined content is output, the information for the predetermined content among the information related to the output of the content, determine that the predetermined condition is satisfied, based on the predetermined content being the first content that does not require the authorization of the output of the content, and determine that the predetermined condition is not satisfied, based on the predetermined content being the second content that requires the authorization of the output of the content.

In addition, according to an aspect of the present disclosure, the controller may confirm, when the application for the outputting the content through the display corresponds to real-time broadcasting, the information for the predetermined content among the information related to the output of the content, based on an Electronic Program Guide (EPG) related to the real-time broadcasting.

Further, according to an aspect of the present disclosure, the display device may further include an external device interface which communicates with an external device, and the controller may acquire at least one of first information for an application executed in the external device and second information for the predetermined content based on an image of the predetermined content output through the display in a case of outputting the predetermined content according to a signal received from the external device, and determine whether the predetermined condition is satisfied based on the acquired information.

In addition, according to an aspect of the present disclosure, the display device may further include a memory which stores a learning model processing an image, and the controller may acquire at least one of the first information and the second information based on a result of processing the image of the predetermined content by using the learning model.

Further, according to an aspect of the present disclosure, the display device may further include a network interface which communicates with a server processing an image, and the controller may transmit data corresponding to the image of the predetermined content to the server through the network interface, and receive at least one of the first information and the second information, which corresponds to the result of processing the image of the predetermined content.

In addition, according to an aspect of the present disclosure, the controller may encrypt audio data of the predetermined content by using authentication information to be used for encrypting audio data based on dissatisfaction of the predetermined condition, and broadcast a second audio packet including the encrypted audio data.

Further, according to an aspect of the present disclosure, the controller may suspend playback of the predetermined content in response to the dissatisfaction of the predetermined condition and non-setting of the authentication information, and resume the playback of the predetermined content, in response to the authentication information being set.

In addition, according to an aspect of the present disclosure, the display device may further include a user input interface, and the controller may output a first screen for setting the authentication information through the display in response to the dissatisfaction of the predetermined condition and the non-setting of the authentication information, set the authentication information according to a user input received through the user input interface while the first screen is output, and encrypt the audio data of the predetermined content, in response to the authentication information being set.

Further, according to an aspect of the present disclosure, the controller may output a second screen for displaying the preset authentication information through the display in response to the dissatisfaction of the predetermined condition and the presetting of the authentication information.

In addition, according to an aspect of the present disclosure, the display device may further include: a network interface which is connected to a network; and a memory which stores data for at least one user terminal, and the controller may transmit a first signal corresponding to non-encryption of the audio data of the predetermined content to the at least one user terminal through the network based on the satisfaction of the predetermined condition, and transmit a second signal corresponding to encryption of the audio data of the predetermined content to the at least one user terminal through the network based on the dissatisfaction of the predetermined condition.

Further, according to an aspect of the present disclosure, the controller may confirm a user terminal connected to a local network to which the display device is connected among the at least one user terminal, transmit the first signal to the user terminal connected to the local network based on the satisfaction of the predetermined condition, and transmit the second signal to the user terminal connected to the local network based on the dissatisfaction of the predetermined condition.

In addition, according to an aspect of the present disclosure, the second signal may include authentication information preset to be used for encrypting the audio data.

In order to achieve the object, a system according to an embodiment of the present disclosure may include: a display device; at least one user terminal; and an audio device communicatively connected to the at least one user terminal, and the display device may confirm information related to an output of a content through a display of the display device, based on activation of a predetermined function of broadcasting an audio packet including audio data through the wireless communication interface, determine whether a predetermined condition related to providing an audio of a predetermined content output through the display is satisfied, based on the information related to the output of the content, broadcast a first audio packet including audio data of the predetermined content based on satisfaction of the predetermined condition, and perform a predetermined operation related to encryption of the audio data of the predetermined content based on dissatisfaction of the predetermined condition.

Further, according to an aspect of the present disclosure, the display device may transmit a first signal corresponding to non-encryption of the audio data of the predetermined content to the at least one user terminal through a network connected through a network interface of the display device based on the satisfaction of the predetermined condition, and transmit a second signal corresponding to encryption of the audio data of the predetermined content to the at least one user terminal through the network based on the dissatisfaction of the predetermined condition, and the at least one user terminal may transmit, to the audio device, information for the non-encryption of the audio data of the predetermined content when receiving the first signal from the display device, and transmit, to the audio device, information for the encryption of the audio data of the predetermined content when receiving the second signal from the display device.

In addition, according to an aspect of the present disclosure, the at least one user terminal may be connectable to a local network to which the display device is connected, and the display device may confirm a user terminal connected to the local network among the at least one user terminal, transmit the first signal to the user terminal connected to the local network based on the satisfaction of the predetermined condition, and transmit the second signal to the user terminal connected to the local network based on the dissatisfaction of the predetermined condition.

In order to achieve the object, an operating method of a display device according to an embodiment of the present disclosure may include: an operation of confirming information related to an output of a content through a display, based on activation of a predetermined function of broadcasting an audio packet including audio data; an operation of determining whether a predetermined condition related to providing an audio of a predetermined content output through the display is satisfied, based on the information related to the output of the content; an operation of broadcasting a first audio packet including audio data of the predetermined content based on satisfaction of the predetermined condition; and an operation of performing a predetermined operation for encryption of the audio data of the predetermined content based on dissatisfaction of the predetermined condition.

Since the accompanying drawings are merely for easily understanding embodiments disclosed herein, it should be understood that the technical idea disclosed herein is not limited by the accompanying drawings, and all changes, equivalents or substitutions are included in the idea and technical scope of the present disclosure.

Meanwhile, an operation method of the present disclosure can also be embodied as processor readable code on a processor-readable recording medium. The processor-readable recording medium includes all kinds of recording apparatuses storing data that can be read by a processor. Examples of the processor-readable recording medium is ROM, RAM, CD-ROM, magnetic tapes, floppy disks, optical data storage apparatuses, and, including those that are implemented in the form of carrier waves such as data transmission through the Internet. In addition, the processor-readable recording medium is dispersed in computer systems connected through a network, so that the processor-readable code can be stored and executed in a distributed fashion.

While the present disclosure has been particularly shown and described with reference to exemplary embodiments thereof, it will be understood by those of ordinary skill in the art that various changes in form and detail may be made herein without departing from the idea and scope of the present disclosure as defined by the following claims and such modifications and variations should not be understood individually from the technical idea or aspect of the present disclosure.

## Claims

1. A display device (100) comprising:
a display (180);
a wireless communication interface (173); and
a controller (170) configured to:
confirm information related to an output of a content through the display (180), based on activation of a predetermined function of broadcasting an audio packet including audio data through the wireless communication interface (173),
determine whether a predetermined condition related to providing an audio of a predetermined content output through the display (180) is satisfied, based on the information related to the output of the content,
broadcast a first audio packet including audio data of the predetermined content through the wireless communication interface (173), based on satisfaction of the predetermined condition, and
perform a predetermined operation related to encryption of the audio data of the predetermined content based on dissatisfaction of the predetermined condition.

2. The display device (100) of claim 1, wherein the controller (170) is configured to:
confirm, in response to execution of an application for outputting of the content through the display (180) while the predetermined function is activated or the activation of the predetermined function while an application for outputting the content through the display (180) is executed, information for the executed application among the information related to the output of the content,
determine that the predetermined condition is satisfied, based on the executed application being a first application that does not require or optionally requires an authorization of use of a service, and
determine that the predetermined condition is not satisfied, based on the executed application being a second application that requires the authorization of the use of the service.

3. The display device (100) of claim 1 or 2, wherein the controller (170) is configured to:
confirm, in response to the output of the content while the predetermined function is activated or the activation of the predetermined function while the predetermined content is output through the display (180), information for the predetermined content among the information related to the output of the content,
determine that the predetermined condition is satisfied, based on the predetermined content being a first content that does not require an authorization of the output of the content, and
determine that the predetermined condition is not satisfied, based on the predetermined content being a second content that requires the authorization of the output of the content.

4. The display device (100) of any one of claims 1 to 3, wherein the controller (170) is configured to confirm, when the application for the outputting the content through the display (180) corresponds to real-time broadcasting, information for the predetermined content among the information related to the output of the content, based on an Electronic Program Guide (EPG) related to the real-time broadcasting.

5. The display device of any one of claims 1 to 4, further comprising:
an external device interface (135) configured to communicate with an external device,
wherein the controller (170) is configured to:
acquire at least one of first information for an application executed in the external device and second information for the predetermined content based on an image of the predetermined content output through the display (180) in a case of outputting the predetermined content according to a signal received from the external device, and
determine whether the predetermined condition is satisfied based on the acquired information.

6. The display device (100) of claim 5, further comprising:
a memory (140) configured to store a learning model processing an image,
wherein the controller (170) is configured to acquire at least one of the first information and the second information based on a result of processing the image of the predetermined content by using the learning model.

7. The display device (100) of claim 5 or 6, further comprising:
a network interface (133) configured to communicate with a server processing an image,
wherein the controller (170) is configured to:
transmit data corresponding to the image of the predetermined content to the server through the network interface (133), and
receive at least one of the first information and the second information, which corresponds to the result of processing the image of the predetermined content.

8. The display device (100) of any one of claims 1 to 7, wherein the controller (170) is configured to:
encrypt audio data of the predetermined content by using authentication information to be used for encrypting audio data based on dissatisfaction of the predetermined condition, and
broadcast a second audio packet including the encrypted audio data.

9. The display device (100) of claim 8, wherein the controller (170) is configured to:
suspend playback of the predetermined content in response to the dissatisfaction of the predetermined condition and non-setting of the authentication information, and
resume the playback of the predetermined content, in response to the authentication information being set.

10. The display device (100) of claim 8 or 9, further comprising:
a user input interface (150),
wherein the controller (170) is configured to:
in response to the dissatisfaction of the predetermined condition and non-setting of the authentication information, output a first screen for setting the authentication information through the display (180),
set the authentication information according to a user input received through the user input interface (150) while the first screen is output, and
encrypt the audio data of the predetermined content, in response to the authentication information being set.

11. The display device (100) of claim 10, wherein the controller (170) is configured to, in response to the dissatisfaction of the predetermined condition and presetting of the authentication information, output a second screen for displaying the preset authentication information through the display (180).

12. The display device (100) of any one of claims 1 to 11, further comprising:
a network interface (133) configured to connect to a network; and
a memory (140) configured to store data for at least one user terminal (600),
wherein the controller (170) is configured to:
transmit a first signal corresponding to non-encryption of the audio data of the predetermined content to the at least one user terminal (600) through the network based on the satisfaction of the predetermined condition, and
transmit a second signal corresponding to encryption of the audio data of the predetermined content to the at least one user terminal (600) through the network based on the dissatisfaction of the predetermined condition.

13. The display device (100) of claim 12, wherein the controller (170) is configured to:
confirm a user terminal connected to a local network to which the display device (100) is connected among the at least one user terminal (600),
transmit the first signal to the user terminal connected to the local network based on the satisfaction of the predetermined condition, and
transmit the second signal to the user terminal connected to the local network based on the dissatisfaction of the predetermined condition.

14. The display device (100) of claim 12 or 13, wherein the second signal includes authentication information preset to be used for encrypting the audio data.

15. A system comprising:
a display device (100) of any one of claims 1 to 14;
at least one user terminal (600); and
an audio device (700) communicatively connected to the at least one user terminal (600).
